Europäisches Patentamt

(19) European Patent Office

Office européen des brevets

(11) Publication number: **0 245 104**
**A2**

## (12) EUROPEAN PATENT APPLICATION

(21) Application number: 87304102.4

(22) Date of filing: 08.05.87

(51) Int. Cl.⁴: **B 60 P 1/02**

(30) Priority: 08.05.86 GB 8611257

(43) Date of publication of application: 11.11.87
Bulletin 87/46

(84) Designated Contracting States: AT BE CH DE ES FR GB
GR IT LI LU NL SE

(71) Applicant: DEREK CROUCH (SALES) LIMITED, Eye
Peterborough PE6 7UW (GB)

(72) Inventor: Chown, Peter Arthur Charles, Foldgate Lane
Wiggenhall St Mary Magdalen, King's Lynn Norfolk (GB)

(74) Representative: Jones, William, Willow Lane House
Willow Lane, Norwich NR2 1EU (GB)

(54) Drop-floor trailer.

(57) A trailer comprising a body; a load-carrying floor forming part of that body; means, selected from the group comprising wheels, skids and struts, supporting the floor some way above the ground on which the trailer stands in use; and means to hitch the trailer to a towing vehicle; characterised by the provision of first means linking the trailer floor to the remainder of the trailer body such that the floor can be dropped from the body to the ground for loading; second, power-aided means to raise the trailer floor and its load subsequently back into the body; and third means securing the trailer floor and its load in that raised position for transport of the load by the trailer.

## DROP-FLOOR TRAILER

### Field of the Invention

The invention relates to trailers, and although the term "trailer" is conventionally applicable to wheeled road-going units, it is intended in this specification to include units which engage the road via skids or struts and are dragged or sledded, as well as those units pulled along on rotary wheels.

### Review of Art Known to the Applicant

Trailers as a class are wellknown and are a familiar sight on most roads. The small two-wheeled trailer for carrying light goods is particularly widespread in use. Conventionally, such trailers incorporate an essentially simple floored construction, and the wheels may ride independently on respective suspension units which can be bought as proprietary items, for example under the Trade Mark INDESPENSION.

It is known to provide trailers with tailboards which, when closed, form the back or (less usually) a side panel of the trailer body and which, when opened, swing down to the ground without parting company from the trailer body. In that opened position, the tailboard functions as a ramp.

There are, however, many instances where it is difficult, if not impossible, to manoeuvre goods up such a ramp. For example, an invalid carriage which might well be capable of fitting within the confines of the trailer body can equally well be so heavy as to be impossible to manoeuvre up the ramp into the trailer; even where a ramp is fitted.

In an altogether different field of art, so-called vehicle tail lifts have been developed to try to overcome the problems associated with manoeuvring goods into a vehicle. Typical examples are shown in UK Patent Specifications Nos. 1 131 564; 1 529 055; 2 024 767 (all in the name of Ratcliff). These are widely used in commerce, but are essentially bulky and heavy fitments.

Less bulky tail lifts, developed to fit light vans are shown in other Ratcliff UK Patent Specifications Nos. 1 220 757 and 1 475 324. A further example, again for a light delivery van, is Ratcliff UK Patent Specification No. 1 446 656 and a lift working in a similar sliding manner to this latter Ratcliff specification is also shown in UK Patent Specification No. 2 107 671 (May).

All these prior lifts exhibit the same drawbacks. They are relatively heavy, whatever size of vehicle they are intended to fit. When stowed, they affect the weight distribution of the vehicle, or they take up an undue amount of its loading space, or both. They therefore have no application to trailer fitment. And once the load-bearing platform of such a lift has reached the load-carrying floor of the vehicle, it has not taken the load forward into the vehicle; the load must first be transfered from the platform into the vehicle and/or the platform must be stowed before the vehicle moves off with the load.

Thus, the conventional light trailer with its load-carrying floor some way off the ground on which the trailer stands in use, has drawbacks when it comes to manoeuvring a heavy and/or bulky load into the trailer; there is no readily apparent solution to these drawbacks from the trailer art; and the only conceivable art which addresses the same problem is so far removed from the field of light trailers that it would never be considered by the trailer expert and even if it was, it provides no solution whatever, for the reasons outlined above.

It is a general object of the present invention to provide a trailer where goods can be easily loaded onto and unloaded from the trailer floor even though, in use, the trailer floor remains conventionally supporting the goods in transit.

It is a further general object of the invention to provide such a trailer without the need to resort to the bulky, heavy, expensive and in this context unduly complex vehicle tail lift type of arrangement.

These and other object of the invention will become apparent from the enclosed description of presently preferred embodiments thereof, with reference 'to the accompanying drawings. The invention itself will be summarised in the following paragraphs. But it is to be understood that the spirit and scope of the invention is defined by the claims at the end of this specification, and that the described embodiments are not to be taken as limiting the invention unduly.

0245104

-4-

## Summary of the Invention

In its broadest aspect the invention provides a trailer having a floor which can be dropped at will from the remainder of the trailer body to rest, in its dropped condition, on the ground on which the trailer stands in use; and with power-aided means to raise the trailer floor subsequently back to the level it originally occupied; and means to secure it in that last-mentioned position for transport of goods by the trailer.

Such an arrangement enables goods to be easily loaded onto and unloaded from the trailer floor when the floor is in its dropped position. It is only necessary to manoeuvre the load over the lip of the floor.

The term "power-aided means" includes such prime-mover-operated mechanisms as hydraulic rams and motor-driven screw jacks; but it is also intended to include hand-operated mechanisms which transmit the operator's effort to the floor with a mechanical advantage. Something as basic as a simple cable winch could function in this way.

Preferably, the trailer floor, as it is dropped, maintains substantially unchanged attitude relative to the ground on which the trailer stands. It is conceivable, however, and is intended to be within the scope of the invention, that the floor may alter in attitude as it descends. For example, the floor may drop in such a way that it first swings about one end until the other end contacts the ground, and then the first-mentioned one end follows.

-5-

Where the trailer has a body which includes walls, as well as the floor, ie, where the trailer is not just an open-platform trailer, it is preferred that at least one of the walls is adapted to swing open about for example a vertical axis once the trailer floor has been dropped; so that loads can be manoeuvred into and unloaded from the trailer freely.

It is nevertheless conceivable, and is within the scope of the invention, that with certain relatively shallow and flat loads, there could open up a sufficiently large gap between the dropped floor, and the rest of the trailer body for the load simply to be slid out off the floor beneath the rest of the trailer body.

In one previously made embodiment of the invention, to be described and illustrated, the trailer floor is dropped by power-aided means as well as being subsequently raised by such means; it remains in a substantially horizontal attitude throughout its downward and upward movement (assuming of course that the rest of the trailer remains in a substantially constant attitude throughout such movements); and the power-aided means comprise respective fluid-pressure-operated rams mounted in substantially upright positions one on each opposite side of the trailer.

In this embodiment also, the trailer has walls as well as a floor, and the back wall swings open about a substantially vertical axis to allow loads to be manoeuvred onto and off the dropped trailer floor.

In a second and presently preferred embodiment of the invention, the trailer again preferably has walls; but the floor is dropped and subsequently raised on a parallellogram linkage which connects the floor to the rest of the trailer body, and is winched up and down, rather than being controlled by, and attached to the rest of the trailer body by, fluid-pressure-operated rams.

## Brief Description of the Drawings

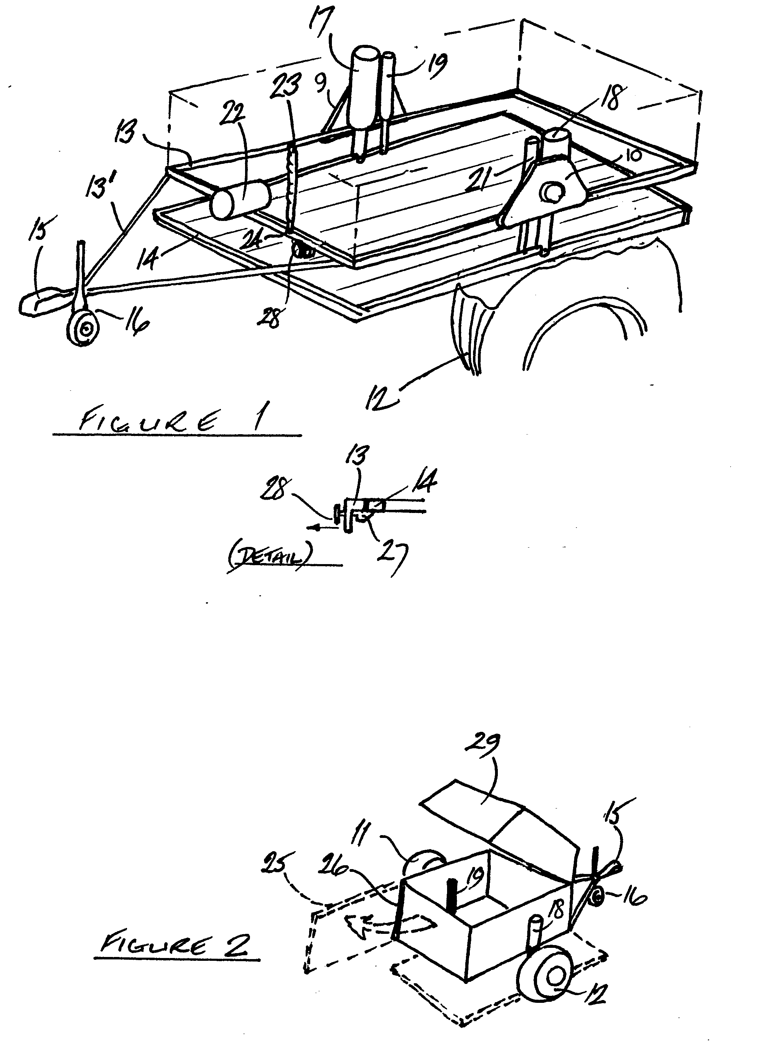

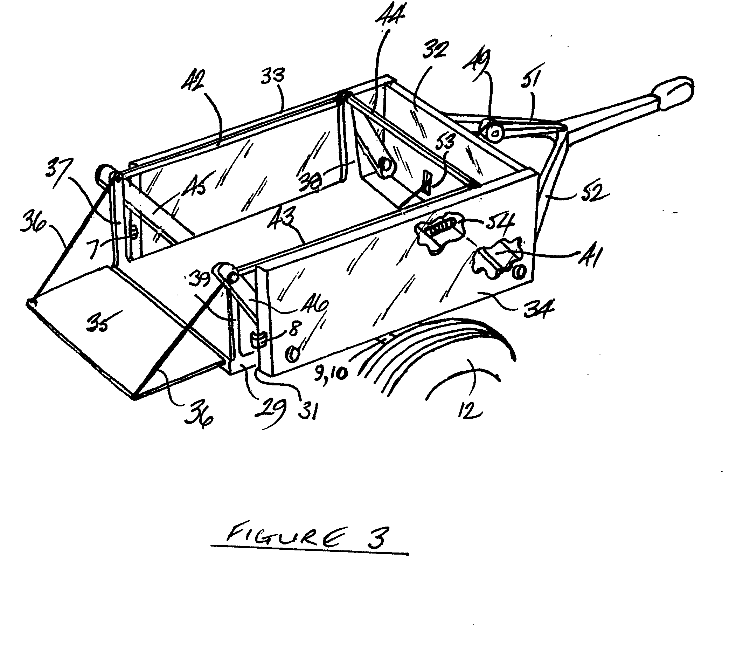

Figures 1 and 2 shown in perspective and respectively, the basic framework and floor-dropping mechanism of the first embodiment, and the overall aspect of the first embodiment; whilst Figure 3 is a view corresponding to Figure 1 but referring to the second embodiment.

## Description of the First Embodiment

A two-wheeled trailer rides on wheels referenced 11, 12 respectively. Each of these wheels is mounted via an INDESPENSION unit (INDESPENSION is a Trade Mark) to the framework 13 of the trailer body. As shown, the framework 13 is an essentially rectangular structure incorporating a towing frame extension 13' ending in a conventional towing hitch 15 and with a retractable nose wheel 16 mounted adjacent the hitch. The use of the INDESPENSION units, instead of a common axle spanning the two wheels 11, 12, leave the underside of the trailer free for the trailer floor to be dropped and subsequently raised. The units are referenced 9, 10.

The floor itself is based around an essentially rectangular framework 14 which is boarded or otherwise floored-in. The framework 14 fits closely within the framework 13 but is an easy non-sliding fit within that framework 13.

The two frameworks are permanently linked to one another by respective double-acting hydraulic rams 17, 18 and by respective telescoping slide bars 19, 21. The cylinder of each ram 17, 18 is firmly fixed to a respective opposite longitudinal side member of the framework 13 to stand in a substantially vertical upright position, when the trailer is in its normally intended attitude of use. The rod end of each ram is fixed to the corresponding side member of the framework 14; but it is pivotally fixed, not rigidly fixed.

-7-

In similar and almost analogous manner, the two halves of each telescoping slide bar unit 19, 21 are fixed respectively to side members of the frameworks 13 and 14; but, unlike the rams, each opposite end of the two parts of each slide bar unit is rigidly fixed to its associated frame member.

A small hydraulic pump 22 is linked by fluid supply lines (conventionally ) to each of the rams 17, 18. The rams are double-acting rams, and the pump 22 may be a hand-bar-operated pump (the hand bar 23 is shown stowed on a clip 24 fixed to the trailer body).

The trailer body has walls, and the back wall 25 hinges open and shut about one end-axis 26. A spring-loaded detent 27 engages under the trailer floor when the floor is fully raised and in use for transporting goods. A hand button 28 can be pulled out against the spring force to release the detent 27 and allow the trailer floor to be dropped.

To drop the floor, the pump 22 is operated, and exhausts fluid progressively from the rams 17, 18 to give a cushioned lowering movement to the floor. When the floor reaches the ground on which the trailer stands, having maintained a substantially horizontal attitude throughout its dropping movement, goods can be moved off or loaded onto the floor once the tailgate 25 has been swung open.

With the tailgate 25 subsequently closed, the pump 22 can be operated in the opposite sense to pressurise the rams 17, 18 and raise the floor until the two frameworks 13, 14 nest. As the floor comes fully home, the framework 14 automatically rides past the detent 27 and then the detent 27 similarly automatically locks into position beneath the framework 14.

The pressurised rams 17, 18 constitute the main means holding

-8-

the trailer floor in place during transport of goods. The spring loaded locking detent 27 is purely a safety catch in case the rams should fail. The rams 17, 18 are of course pressurised and de-pressurised simultaneously during use. The details of the hydraulic circuitry will be apparent without further inventive thought to the intended skilled addressee of this specification.

A rigid preformed canopy 29 hinges about the top edge of the front wall of the trailer as illustrated in Figure 2. The whole body, including that canopy, but excluding the back wall, could instead hinge as one unit about the bottom edge of the front wall.

Alternatively, the whole body including the back wall could hinge as just described, so removing the back wall from the path of the on-loading or off-loading goods without the need to provide a hinge axis specific to the back wall.

Description of the Second Embodiment

The floor of the trailer shown in Figure 3 is, like that of the Figures 1 and 2 embodiment, comprised of an essentially rectangular framework 29 which is boarded-in. The body of this second trailer, again like that of the first trailer of Figures 1 and 2, has walls which rise from a framework 31 within which the frame 29 nests. In this second embodiment, however, the trailer body has only three walls (a front wall 32 and two opposed side walls 33, 34). The wall which, in use, forms the tailgate of this trailer (and which corresponds to the wall 25 of the first trailer) is hinged, not to the trailer body but to the back edge of the trailer floor framework 29.

This tailgate 35 of the second trailer thus swings about a horizontal, not a vertical, axis when the trailer stands on level ground. As Figure 3 shows, chains 36 link the tailgate 35 to respective uprights 37, 38 rising from the floor framework 29 and limit the swinging-open movement of the tailgate to a position, illustrated in Figure 3, in which the tailgate 35 forms an extension of the floor of the trailer and is substantially horizontal when the floor is substantially horizontal.

The tailgate 35 moves up and down with the trailer floor. When the floor frame 29 is nested within the trailer body, then the tailgate 35 can be swung up against the end faces of the side walls 33, 34. In that position, catches(7,8) secure the tailgate 35 to the trailer walls 33,34. The catches, which are of course readily releasable, can be selected from known alternatives.

The uprights 37, 38 are rigid uprights and rise one from each of two adjacent corners of the trailer floor framework 29. Identical and further uprights 39, 41 rise from each of the two remaining corners of the rectangular peripheral floor framework 29. All four uprights are rigidly welded to the framework, and rigid struts 42, 43 run respectively between uprights 37, 39 and 38, 41 parallel. The struts 42, 43 are non-pivotally fixed at each of their opposite ends to their associated uprights. They run, as shown, parallel with the trailer side walls 33, 34. A third strut 44 is similarly inherently rigid and rigidly fixed to the uprights 39, 41 so as to span these two uprights.

Rigid links 45, 46 are each pivoted at their respective lower ends to the trailer body side wall 33 and at their upper ends to a respective one of the uprights 37, 39. Corresponding and identical links are similarly pivoted to the other side wall 34 and to the remaining uprights 38, 41. Each pair of these links forms with its associated uprights and upright-spanning strut a parallellogram linkage. The two parallellogram linkages thereby defined suspend the floor and floor framework 29, and the tailgate 35, from the trailer body.

A hand-operated cable winch 49 is mounted on a beam 51 which runs between the hitch-supporting framework 52 and the front wall 32 of the trailer. The winch cable pierces the front wall 32 via a slot 53 in that wall, and is fixed to the front edge of the trailer floor framework 29.

A plunger 54 is spring-loaded to push the trailer floor framework 29 away from the trailer front wall 32. With the framework 29 nested within the trailer body, the front of the framework presses the plunger 54 against the spring-loading and into its housing (in frame 29). In this situation, the winch cable is taut; but it is the catches, holding the tailgate 35 against the walls 33, 34, which primarily hold the trailer floor in the body. Should the winch cable slacken, or break, these fastened catches will prevent the floor from dropping from the trailer.

To drop the floor, and with the just-mentioned catches released so that the tailgate 35 can be swung down into the position illustrated in Figure 3, the winch 49 is unwound. The plunger 54 starts the floor and floor framework 29 moving, because in the nested position of the floor the links 45, 46, 47, 48 are all upright or slightly "over-centre". As the winch unwinds, the floor swings in an arc about the link side wall pivots, and eventually rests on the ground.

The floor can then be winched up again into its nested position, the tailgate 35 swung up against the back edges of the side walls 33, 34, and the tailgate-retaining catches fastened against the side walls 33, 34.

Although a hand-operated cable winch 49 has been described and illustrated, a fluid-pressure-operated or electrically operated winch could be substituted.

Like the first embodiment of Figures 1 and 2, the second embodiment of Figure 3 is supported on pneumatically tyred wheels each attached to the trailer body by INDESPENSION units or their equivalent, 9, 10.

0245104

## CLAIMS

1.        A trailer comprising a body; a load-carrying floor forming part of that body; means, selected from the group comprising wheels, skids and struts, supporting the floor some way above the ground on which the trailer stands in use; and means to hitch the trailer to a towing vehicle; characterised by the provision of first means linking the trailer floor to the remainder of the trailer body such that the floor can be dropped from the body to the ground for loading; second, power-aided means to raise the trailer floor and its load subsequently back into the body; and third means securing the trailer floor and its load in that raised position for transport of the load by the trailer.

2.        A trailer according to Claim 1 and characterised by the feature that the power-aided means comprise respective fluid-pressure-operated rams with means mounting said rams in substantially upright in-use positions one on each opposite side of the trailer.

3.        A trailer according to Claim 2 and characterised by the feature that the means mounting the rams constitutes a main means linking the trailer floor to the remainder of the trailer body.

4.        A trailer according to Claim 1 and characterised by the feature that the means linking the trailer floor to the remainder of the trailer body comprises a parallelogram linkage.

5.        A trailer according to Claim 4 and characterised by the provision of a cable winch as the power-aided means dropping and raising the trailer floor in conjunction with the parallelogram linkage.

6.        A trailer according to Claim 1 and in which the trailer body comprises walls including side walls and a tailgate, with means hinging the tailgate to the body; and characterised by the features, that the tailgate hinges open and shut about an end-axis of one of the side walls, and that the hinging means connect the tailgate to that said one of the side walls and not to the trailer floor.

7. A trailer according to Claim 1 and in which the trailer includes a tailgate, characterised by the provision of means hinging the tailgate to the trailer floor.

8. A trailer according to Claim 1 and characterised by the feature that the means linking the trailer floor to the rest of the trailer body maintain the floor in a substantially unchanged attitude, relative to the ground on which the trailer stands, as the floor is dropped and raised in use.

9. A trailer substantially as described herein with reference to and as illustrated in Figures 1 and 2 of the accompanying drawings.

10. A trailer substantially as described herein with reference to and as illustrated in Figure 3 of the accompanying drawings.

1/2                    0245104

FIGURE 1

(DETAIL)

FIGURE 2

FIGURE 3